# NEUE EUROPÄISCHE PATENTSCHRIFT

(11) **EP 0 982 425 B2**
(45) Veröffentlichungstag und Bekanntmachung des Hinweises auf die Entscheidung über den Einspruch: **29.08.2007**
(45) Hinweis auf die Patenterteilung: 01.10.2003
(21) Anmeldenummer: 99115791.8
(22) Anmeldetag: 11.08.1999
(51) Int. Cl.: D06F 37/30, H02K 21/22, H02K 1/16

(54) **Wäschebehandlungsgerät**
Laundry treatment apparatus
Appareil de traitement du linge

(30) Priorität: 17.08.1998 DE 19836944
(43) Veröffentlichungstag der Anmeldung: 01.03.2000
(73) Patentinhaber: Miele & Cie. KG, 33332 Gütersloh (DE)
(72) Erfinder: Horstmann, Frank, 52391 Vettweiss (DE); Rode, Peter, Dr., 53881 Euskirchen (DE)

(56) Entgegenhaltungen:
- EP-A- 0 930 694
- EP-B- 0 960 231
- WO-A-98/00902
- DE-A- 4 335 966
- DE-A- 4 341 832
- DE-A- 19 806 258
- NZ-A- 314 016
- NZ-A- 328 233
- PATENT ABSTRACTS OF JAPAN vol. 1996, no. 03, 29. März 1996 (1996-03-29) -& JP 07 308057 A (YASKAWA ELECTRIC CORP), 21. November 1995 (1995-11-21)

## Beschreibung

Die Erfindung betrifft ein Wäschebehandlungsgerät wie Waschmaschine, Wäschetrockner oder Waschtrockner mit einer drehbar gelagerten Trommel mit mindestens annähernd horizontaler Drehachse, und mit einem auf der Trommelwelle angeordneten Antriebsmotor in Form eines permanentmagneterregten Synchronmotors, dessen Stator mit einer Wicklung versehen ist, welche durch einen Umrichter bestromt wird, wobei die Wicklung als Einzelpolwicklung ausgeführt ist, wobei die Anzahl der Statorpole und der Magnetpole ungleich ist, und wobei als Umrichter ein Frequenzumrichter verwendet wird, dessen Ausgangsspannung derart eingestellt ist, daß sich in allen Wicklungssträngen kontinuierliche Ströme ausbilden.

Wie bereits in der DE 198 06 258 A1 und der korrespondierenden internationalen Patentanmeldung WO 98/36123 A1 beschrieben, werden im Gegensatz zu den bisher bekannten Direktantrieben für Waschmaschinen mit elektronisch kommutierten Gleichstrommotoren bei dem hier beschriebenen Antriebskonzept alle Wicklungsstränge der dreiphasigen Statorwicklung kontinuierlich bestromt. Hierdurch ist die Geräuschentwicklung bereits geringer als bei elektronisch kommutierten Gleichstrommotoren, trotzdem können die bei permanentmagneterregten Motoren auftretenden Reluktanzmomente zu einer unerwünschten Geräuschentwicklung führen.

Aus der WO 98/00902 A1 ist ein Direktantrieb für Waschmaschinen bekannt, bei dem ein elektronisch kommutierter Gleichstrommotor eingesetzt wird. Der Motor besitzt ein Rotorpol - zu - Statorpol - Verhältnis von 4/3 und ein Statorzahnbreiten - zu - Nutschlitzbreiten - Verhältnis von 1.868. Dieser relativ geringe Wert, welcher wiederum den Rückschluß auf eine ungewöhnlich geringe Breite der Statorzähne zuläßt, scheint der Grund dafür zu sein, daß zusätzliche Maßnahmen zur Erzeugung einer sinusförmigen Induktionsspannung getroffen werden müssen. Aus diesem Grund wird in der WO 98/00902 A1 vorgeschlagen, die Statorpole oder die Permanentmagneten mit einer leicht konvexen Form zu versehen. Hierdurch soll ein geräuscharmer Lauf des elektronisch kommutierten Gleichstrommotors auch bei hohen Momenten an der Motorwelle erreicht werden. Reluktanzmomente werden in dieser Patentanmeldung nicht betrachtet.

Da bei Motoren mit größeren Statorzahnbreiten - zu - Nutschlitzbreiten - Verhältnissen bereits aufgrund der Statorgeometrie eine sinusförmige Induktionsspannung erreicht wird, liegt der hier beschriebenen Erfindung die Aufgabe zugrunde, bei dem Antriebsmotor eines Wäschebehandlungsgeräts der eingangs genannten Art die Pulsationen der Reluktanzmomente zu eliminieren oder wenigstens deutlich zu reduzieren.

Erfindungsgemäß wird dieses Problem bei dem eingangs genannten Wäschebehandlungsgerät dadurch gelöst, daß die Zahnköpfe der Statorpole mindestens in ihren Randbereichen eine derart dimensionierte Krümmung aufweisen, daß der Luftspalt zwischen dem Permanentmagneten und den Zahnflanken 4 bis 6 mal größer als der Luftspalt zwischen dem Permanentmagneten und der Zahnkopfmitte ist.

Es kann Gründe geben, wie z. B. größere Toleranzen oder Verschleißerscheinungen bei der Trommellagerung, den Luftspalt, der bei Permanentmagnetmotoren üblicherweise 0,5 mm bis 0,8 mm beträgt, bis auf 1,2 mm zu vergrößern. In diesem Fall verändert sich das optimale Verhältnis in Richtung kleinerer Werte. Bei einem Luftspalt von 1,2 mm sollte die Krümmung derart dimensioniert sein, daß der Luftspalt zwischen dem Permanentmagneten und den Zahnflanken 3 bis 5 mal größer als der Luftspalt zwischen dem Permanentmagneten und der Zahnkopfmitte ist.

Durch die erfindungsgemäße Ausbildung des Antriebsmotors und die damit verbundene stark konvexe Ausbildung der Zahnköpfe wird eine deutliche Aufweitung des Luftspaltes an den Zahnflanken und somit eine wirksame Reduzierung der Reluktanzmomente erreicht. Durch diese Geometrie heben sich die Kraftbeträge, die für die Bildung von Reluktanzmomenten maßgebend sind, über eine Elementarmaschine, bestehend aus 4 Rotorpolen und 3 Statorpolen weitgehend auf. Dies gilt insbesondere für Motoren mit einem Verhältnis der Zahnkopfbreite b_{Z} zur Polteilung τ_{P} von 0,7 ... 0,8, was wiederum zu Statorzahnbreiten - zu - Nutschlitzbreiten - Verhältnissen von 2,33 ... 4 führt.

Die Zahnköpfe der Statorpole weisen in der Mitte einen abgeflachten Teilbereich auf, welcher mit dem Permanentmagneten einen annähernd konstanten Luftspalt bildet. Diese Abflachung verhindert eine starke Reduzierung des magnetischen Flusses durch die beschriebene Luftspaltaufweitung. Insbesondere bei Einsatz von Blockmagneten mit einer Pollükke bleibt die Abnahme des magnetischen Flusses durch die stark konvexe Statorpolform so gering, daß weiterhin hohe Wirkungsgrade mit diesem Antrieb erreicht werden.

In Verbindung mit dieser Statorgeometrie ergibt sich sowohl bei Segmentmagneten, die bezogen auf den Luftspalt konkav ausgebildet sind, als auch bei Blockmagneten mit einer Pollücke, ein deutlich reduziertes Eigenrastverhalten und somit ein äußerst geringes Betriebsgeräusch bei allen Drehzahlen.

Die Kombination der zuvor beschriebenen Maßnahmen bewirkt ebenfalls eine deutliche Reduzierung der Reluktanzmomente.

Ein Ausführungsbeispiel der Erfindung ist in den Zeichnungen rein schematisch dargestellt und wird nachfolgend näher beschrieben. Es zeigen
- Figur 1: den prinzipiellen Aufbau eines permanentmagneterregten Synchronmotors mit Blockmagneten (31) und konvexen Statorpolen (6)
- Figur 2: einen Ausschnitt aus Figur 1
- Figur 3: einen Ausschnitt eines permanentmagneterregten Synchronmotors mit Segmentmagneten (32) und konvexen Statorpolen (6)
- Figur 4 a,b: einen Ausschnitt eines permanentmagneterregten Synchronmotors mit Blockmagneten (31) und geschränkten Statorpolen in Seitenansicht und Draufsicht

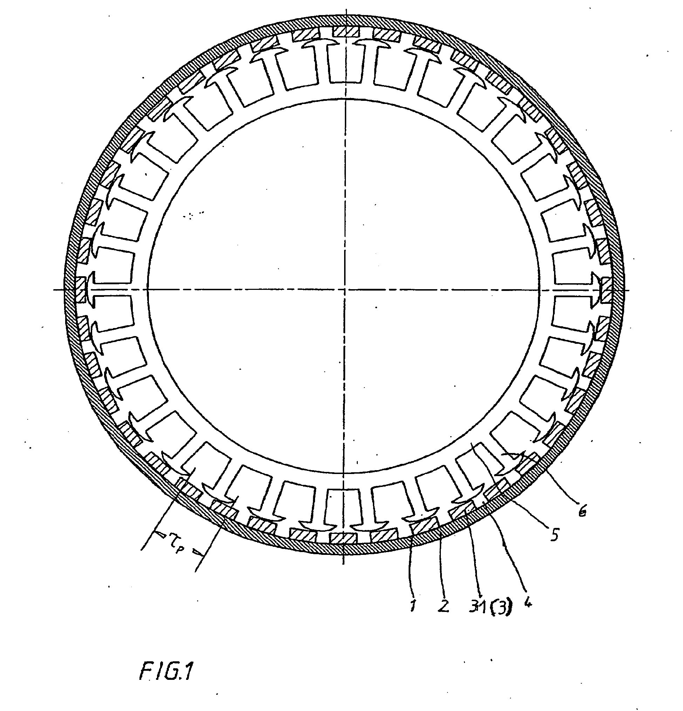

In den Figuren 1 bis 4 ist lediglich der erfindungsgemäße Aufbau des Motors beschrieben, die aus der Patentanmeldung 198 06 258.3 bekannten Vorrichtungen und Verfahren zur Bestromung des Motors sind hier nicht näher erläutert.

Der Rotor (1) des in Figur 1 dargestellten permanentmagneterregten Synchronmotors ist als Außenläufer ausgebildet. Er besitzt einen weichmagnetischen Eisenrückschluß (2), auf dessen Innenseite Permanentmagnete (3) mit rechteckigem Querschnitt als Rotorpole befestigt sind. Die Breite der Permanentmagnete (31) ist kleiner als die Polteilung des Rotors (1), wodurch Lücken (4) zwischen den Permanentmagneten (31) gebildet werden.

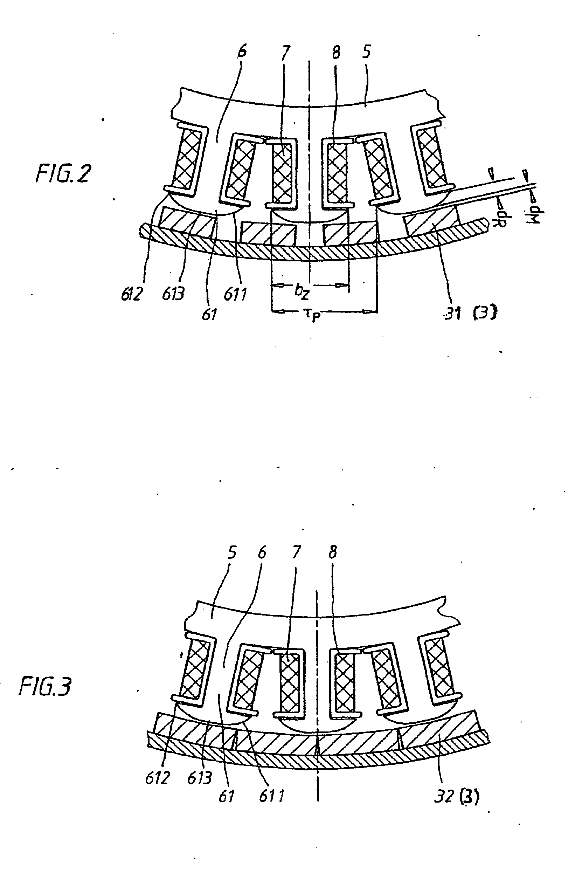

Das Statorblechpaket (5) weist am Umfang eine Reihe von ausgeprägten Statorpolen (6) auf, die mit Statorwicklungen (7) versehen sind (s. Figur 2). Die Wicklungen (7) sind über Wicklungskörper (8) gegen das Statorblechpaket (5) isoliert. Das Verhältnis von Rotorpolen zu Statorpolen beträgt 4/3.

Die Zahnköpfe (61) der Statorpole (6) weisen in ihren Randbereichen eine derart dimensionierte Krümmung (611) auf, daß der Luftspalt d_{R} zwischen den Permanentmagneten (3) und den Zahnkopfflanken (612) 4 bis 6 mal größer als der Luftspalt d_{M} zwischen den Permanentmagneten (3) und den Zahnkopfmitten (613) ist. Bei Luftspalten von ca. 1,2 mm ist der Luftspalt d_{R} zwischen den Permanentmagneten (3) und den Zahnkopfflanken (612) 3 bis 5 mal größer als der Luftspalt d_{M} zwischen den Permanentmagneten (3) und den Zahnkopfmitten (613). In der Mitte (613) besitzen die Zahnköpfe (61) einen abgeflachten Teilbereich, der mit dem Permanentmagneten (3) einen konstanten Luftspalt d_{M} bildet. Das Verhältnis a der Zahnkopfbreite b_{Z} zur Polteilung τ_{P} des Startors beträgt 0,7 ... 0,8, was wiederum zu Statorzahnbreiten - zu - Nutschlitzbreiten - Verhältnissen von 2,33 ... 4 führt.

Figur 3 zeigt einen Ausschnitt eines permanentmagneterregten Synchronmotors mit gekrümmten Zahnköpfen (61), bei dem die Permanentmagnete (32) kreissegmentförmig ausgebildet sind. Die Breite der Permanentmagnete (32) entspricht in etwa der Polteilung des Rotors (1), so daß eine geschlossene Anordnung der Magnete (3) erreicht wird. Um den Luftspalt d_{M} im Mittelbereich der Zahnköpfe (61) homogen zu gestalten, weist dieser eine dem Radius des Rotors (1) entsprechende Krümmung auf. Da eine ebene Ausgestaltung der Zahnköpfe (61) nur zu einer Abweichung im Bereich eines Zehntelmillimeters führt, ist auch diese denkbar.

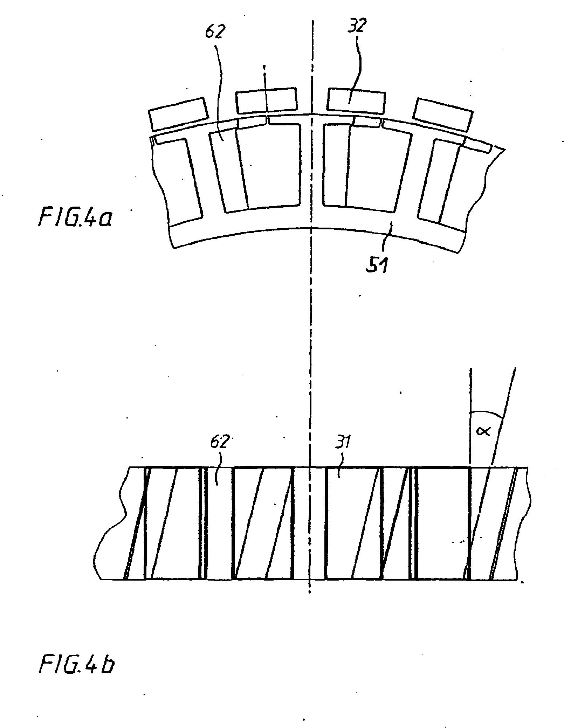

Figur 4a und 4b zeigen einen Ausschnitt eines weiteren permanentmagneterregten Synchronmotors mit Blockmagneten (31) in der Seitenansicht und der Draufsicht. Bei diesem Motor ist das Statorblechpaket (51 )und somit auch die Zahnköpfe (62) geschränkt. Eine deutliche Reduzierung der Reluktanzmomente wird durch eine Schränkung des Statorblechpaketes (51) bzw. der Zahnköpfe (62) um einen Winkel α von 26°...30° elektrisch, bezogen auf eine Statorpolteilung τ_{P}, erreicht. Die Zahnköpfe (62) sind derart gestaltet, daß der Luftspalt zwischen den Zahnköpfen und den Permanentmagneten (3) nahezu homogen ist. Das Verhältnis von Magnetpolen zu Statorpolen (6) beträgt auch in diesem Fall 4 / 3. Auch hier beträgt das Verhältnis von Zahnkopfbreite b_{Z} zur Polteilung τ_{P} 0,7 ... 0,8.

Die Permanentmagnete (3) sind in der dargestellten Ausführung rechteckförmig ausgebildet. Es können jedoch auch bei gleicher Form der Statorpole (6) segmentförmige Permanentmagnete (3) eingesetzt werden. Zur weiteren Reduzierung der Reluktanzmomente sind die Zahnköpfe (62) mit einer Krümmung (nicht dargestellt) in der vorbeschriebenen Dimensionierung versehen sein.

## Patentansprüche

1. Wäschebehandlungsgerät wie Waschmaschine, Wäschetrockner oder Waschtrockner mit einer drehbar gelagerten Trommel mit mindestens annähernd horizontaler Drehachse, und mit einem auf der Trommelwelle angeordneten Antriebsmotor in Form eines permanentmagneterregten Synchronmotors, dessen Stator mit einer Wicklung (7) versehen ist, welche durch einen Umrichter bestromt wird, wobei die Wicklung (7) als Einzelpolwicklung ausgeführt ist, wobei die Anzahl der Statorpole und der Magnetpole ungleich ist, und wobei als Umrichter, ein Frequenzumrichter verwendet wird, dessen Ausgangsspannung derart eingestellt ist, daß sich in allen Wicklungssträngen kontinuierliche Ströme ausbilden, **dadurch gekennzeichnet,**
**daß** die Zahnköpfe (61) der Statorpole mindestens in ihren Randbereichen eine derart dimensionierte Krümmung (611) aufweisen, daß der Luftspalt (d_{R}) zwischen dem Permanentmagneten (31,3) und den Zahnflanken (612) 4 bis 6 mal größer als der Luftspalt (d_{M}) zwischen dem Permanentmagneten (31,3) und der Zahhkopfmitte (613) ist, und daß die Zahnköpfe (61) der Statorpole in der Mitte einen abgeflachten Teilbereich (613) aufweisen, welcher mit dem Permanentmagneten (3) einen annähernd konstanten Luftspalt bildet.

2. Wäschebehandtungsgerät wie Waschmaschine, Wäschetrockner oder Waschtrockner mit einer drehbar gelagerten Trommel mit mindestens annähernd horizontaler Drehachse, und mit einem auf der Trommelwelle angeordneten Antriebsmotor in Form eines permanentmagneterregten Synchronmotors, dessen Stator mit einer Wicklung (7) versehen ist, Welche durch einen Umrichter bestromt wird, wobei die Wicklung (7) als Einzelpolwicklung ausgeführt ist, wobei die Anzahl der Statorpole und der Magnetpole ungleich ist, und wobei als Umrichter ein Frequenzumrichter verwendet wird, dessen Ausgangsspannung derart eingestellt ist, daß sich in allen Wicklungssträngen kontinuierliche Ströme ausbilden, **dadurch gekennzeichnet,**
**daß** der Luftspalt (d_{M}) zwischen dem Permanentmagneten (31,3) und der Zahnkopfmitte (613) ca. 1,2 mm beträgt und daß die Zahnköpfe der Statorpole mindestens in ihren Randbereichen eine derart dimensionierte Krümmung (611) aufweisen, daß der Luftspalt (d_{R}) zwischen dem Permanentmagneten (3) und den Zahnflanken (612) 3 bis 5 mal größer als der Luftspalt (d_{M}) zwischen dem Permanentmagneten (3) und der Zahnkopfmitte (613) ist, und daß die Zahnköpfe (61) der Statorpole in der Mitte einen abgeflachten Teilbereich (613) aufweisen, welcher mit dem Permanentmagneten (3) einen annähernd konstanten Luftspalt bildet.

3. Wäschebehandlungsgerät nach Anspruch 1 oder 2,
**dadurch gekennzeichnet,**
**daß** das Verhältnis der Zahnkopfbreite b_{Z} zur Polteilung τ_{P} 0,7 ... 0,8 beträgt.

## Claims

1. Laundry treating device, such as a washing machine, laundry drier or washer-drier, having a rotatably mounted drum with at least an approximately horizontal axis of rotation, and a drive motor, which is disposed on the drum shaft and is in the form of a synchronous motor energised by a permanent magnet, the stator of the said motor being provided with a winding (7), which is supplied with current by a converter, wherein the winding (7) is in the form of a single-pole winding, wherein the number of stator poles and magnet poles is dissimilar, and wherein a frequency converter is used as the converter, the output voltage of which is set in such a manner that continuous currents are formed in all of the winding strands, **characterised in that** the tooth tips (61) of the stator poles, at least in their edge regions, have a such dimensioned curvature (611) that the air gap (d_{R}) between the permanent magnet (31, 3) and the tooth flanks (612) is 4 to 6 times greater than the air gap (d_{M}) between the permanent magnet (31, 3) and the tooth tip centre (613), and **in that** the tooth tips (61) of the stator poles have, in the centre, a flattened partial region (613), which forms with the permanent magnet (3) an approximately constant air gap.

2. Laundry treating device such as a washing machine, laundry drier or washer-drier, having a rotatably mounted drum with at least an approximately horizontal axis of rotation, and a drive motor, which is disposed on the drum shaft and is in the form of a synchronous motor energised by a permanent magnet, the stator of the said motor being provided with a winding (7), which is supplied with current by a converter, wherein the winding (7) is in the form of a single-pole winding, wherein the number of stator poles and magnet poles is dissimilar, and wherein a frequency converter is used as the converter, the output voltage of which is set in such a manner that continuous currents are formed in all of the winding strands, **characterised in that** the air gap (d_{M}) between the permanent magnet (31, 3) and the tooth tip centre (613) is approximately 1.2 mm and **in that** the tooth tips of the stator poles, at least in their edge regions, have a such dimensioned curvature (611) that the air gap (d_{R}) between the permanent magnet (3) and the tooth flanks (612) is 3 to 5 times greater than the air gap (d_{M}) between the permanent magnet (3) and the tooth tip centre (613), and **in that** the tooth tips (61) of the stator poles have, in the centre, a flattened partial region (613), which forms with the permanent magnet (3) an approximately constant air gap.

3. Laundry treating device according to claim 1 or 2, **characterised in that** the ratio between the tooth tip width b_{z} and the pole pitch tₚ is 0.7 ... 0.8.

## Revendications

1. Appareil de traitement du linge tel que machine à laver, sèche-linge ou laveuse-sécheuse comportant un tambour rotatif avec un axe de rotation au moins approximativement horizontal et un moteur d'entraînement monté sur l'axe de tambour sous la forme d'un moteur synchrone à aimants permanents dont le stator est muni d'un enroulement (7) alimenté par un convertisseur, dans lequel l'enroulement (7) est un enroulement unipolaire, dans lequel le nombre de pôles statoriques et de pôles magnétiques est différent et dans lequel on utilise comme convertisseur un convertisseur de fréquence dont la tension de sortie est réglée de manière à ce qu'il se forme des courants continuels dans toutes les branches de l'enroulement,
**caractérisé par le fait**
**que** les têtes de dents (61) des pôles statoriques présentent au moins dans leurs zones périphériques une courbure (611) dimensionnée de telle sorte que l'entrefer (d_{R}) entre l'aimant permanent (31,3) et les flancs de dents (612) est 4 à 6 fois plus grand que l'entrefer (d_{M}) entre l'aimant permanent (31,3) et le milieu de la tête de dent (613), et que les têtes de dents (61) des pôles statoriques présentent au centre une partie aplatie (613) qui forme un entrefer approximativement constant avec l'aimant permanent (3).

2. Appareil de traitement du linge tel que machine à laver, sèche-linge ou laveuse-sécheuse comportant un tambour rotatif avec un axe de rotation au moins approximativement horizontal et un moteur d'entraînement monté sur l'axe de tambour sous la forme d'un moteur synchrone à aimants permanents dont le stator est muni d'un enroulement (7) alimenté par un convertisseur, dans lequel l'enroulement (7) est un enroulement unipolaire, dans lequel le nombre de pôles statoriques et de pôles magnétiques est différent et dans lequel on utilise comme convertisseur un convertisseur de fréquence dont la tension de sortie est réglée de manière à ce qu'il se forme des courants continuels dans toutes les branches de l'enroulement,
**caractérisé par le fait**
**que** l'entrefer (d_{M}) entre l'aimant permanent (31,3) et le milieu de la tête de dent (613) est d'environ 1,2 mm et que les têtes de dents des pôles statoriques présentent au moins dans leurs zones périphériques une courbure (611) dimensionnée de telle sorte que l'entrefer (d_{R}) entre l'aimant permanent (3) et les flancs de dents (612) est 3 à 5 fois plus grand que l'entrefer (d_{M}) entre l'aimant permanent (3) et le milieu de la tête de dent (613), et que les têtes de dents (61) des pôles statoriques présentent au centre une partie aplatie (613) qui forme un entrefer approximativement constant avec l'aimant permanent (3).

3. Appareil de traitement du linge selon la revendication 1 ou 2,
**caractérisé par le fait**
**que** le rapport entre la largeur de la tête de dent b_{z} et le pas polaire π_{P} est de 0,7 ... 0,8.
